(19) Europäisches Patentamt
European Patent Office
Office européen des brevets

(11) **EP 4 340 070 A1**

(12) **EUROPEAN PATENT APPLICATION**
published in accordance with Art. 153(4) EPC

(43) Date of publication:
**20.03.2024  Bulletin 2024/12**

(21) Application number: **22807378.9**

(22) Date of filing: **28.04.2022**

(51) International Patent Classification (IPC):
*H01M 4/58* (2010.01)     *C01B 33/32* (2006.01)
*H01M 4/36* (2006.01)     *H01M 4/38* (2006.01)

(52) Cooperative Patent Classification (CPC):
**C01B 33/32; H01M 4/36; H01M 4/38; H01M 4/58;**
Y02E 60/10

(86) International application number:
**PCT/JP2022/019356**

(87) International publication number:
**WO 2022/239676 (17.11.2022 Gazette 2022/46)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority:  **13.05.2021   JP 2021081941**

(71) Applicant: **SHIN-ETSU CHEMICAL CO., LTD.**
**Tokyo 1000005 (JP)**

(72) Inventors:
• **OSAWA, Yusuke**
  **Annaka-shi, Gunma 379-0125 (JP)**
• **MATSUNO, Takumi**
  **Annaka-shi, Gunma 379-0125 (JP)**
• **HIROSE, Takakazu**
  **Annaka-shi, Gunma 379-0125 (JP)**
• **TAKAHASHI, Kohta**
  **Annaka-shi, Gunma 379-0125 (JP)**
• **FURUYA, Masahiro**
  **Annaka-shi, Gunma 379-0125 (JP)**

(74) Representative: **Sonnenhauser, Thomas Martin**
**Wuesthoff & Wuesthoff**
**Patentanwälte PartG mbB**
**Schweigerstraße 2**
**81541 München (DE)**

(54) **NEGATIVE ELECTRODE ACTIVE MATERIAL AND METHOD FOR PRODUCING SAME**

(57)     The present invention is a negative electrode active material including negative electrode active material particles, wherein the negative electrode active material particles contain silicon compound particles containing lithium and oxygen, a ratio between oxygen and silicon satisfying SiOx : $0.8 \leq X \leq 1.2$, and containing $Li_2SiO_3$, a Si crystallite size is 10 nm or less, the particles are coated with a carbon coating, and a peak height P1 derived from at least a part of lithium carbonate and a peak height P2 derived from at least a part of $Li_2SiO_3$ satisfy a relationship of $2 \leq P2/P1 \leq 3.5$, the peak of P1 appearing within a range of a diffraction angle 2θ of 20 to 21° and the peak of P2 appearing within a range of the diffraction angle 2θ of 17 to 20° with X-ray diffraction using CuKα radiation. This provides a negative electrode active material that has high stability of an aqueous slurry, that has a high capacity, and that yields good cycle characteristics and first efficiency.

[FIG. 1]

**Description**

TECHNICAL FIELD

The present invention relates to a negative electrode active material and a method for manufacturing the same, and particularly relates to a negative electrode active material for a lithium-ion secondary battery and a method for manufacturing the same.

BACKGROUND ART

Small-sized electronic devices represented by mobile terminals have been widespread in in recent years, and further miniaturizing, lightweight, and longer lifetime are strongly demanded. For such market demands, development of small-sized and lightweight secondary batteries that can yield a high energy density is in progress. It is investigated that this secondary battery is applied for not only the small-sized electronic devices but also large-sized electronic devices represented by automobiles and for power storage systems represented by houses.

Among these, a lithium-ion secondary battery is much promising because the lithium-ion secondary battery has a small size, easily has an increased capacity, and can yield a higher energy density than a lead battery and a nickelcadmium battery.

The above lithium-ion secondary battery has a positive electrode, a negative electrode, a separator, and an electrolyte liquid, and the negative electrode contains a negative electrode active material, which involves charge-discharge reactions.

For this negative electrode active material, a carbon-based active material is widely used, and meanwhile, the recent market demands have required further increase in a battery capacity. For increasing the battery capacity, use of silicon as a material for the negative electrode active material is investigated. This is because a theoretical capacity of silicon (4199 mAh/g) is ten times or more higher than a theoretical capacity of graphite (372 mAh/g), and thereby a remarkable increase in the battery capacity is expected. Development of the silicon material as the material for the negative electrode active material is investigated on not only a silicon single substance but also compounds represented by an alloy and an oxide. A form of the active material is investigated from an applying type, which is standard in the carbon-based active material, to an integrated type in which the active material is directly deposited on a current collector.

However, using silicon as a main raw material for the negative electrode active material causes the negative electrode active material to expand and contract with charge and discharge, easily leading to cracking mainly near a surface layer of the negative electrode active material. In addition, an ionic substance is generated inside the active material, which causes the negative electrode active material to be a fragile substance. Cracking of the surface layer of the negative electrode active material consequently generates a new surface to increase a reaction area of the active material. In this time, a decomposition reaction of the electrolyte liquid occurs on the new surface, and a coating being a decomposed product of the electrolyte liquid is formed on the new surface to consume the electrolyte liquid. Therefore, cycle characteristics are likely to be deteriorated.

There have been various investigations so far on the negative electrode material for the lithium-ion secondary battery with the silicon material as a main material and electrode constitution in order to improve battery initial efficiency and the cycle characteristics.

Specifically, silicon and amorphous silicon dioxide are simultaneously deposited by using a gas phase method for a purpose of obtaining good cycle characteristics and high safety (see Patent Document 1, for example). To obtain a high battery capacity and safety, a carbon material (electron conductive material) is provided on surface layers of silicon oxide particles (see Patent Document 2, for example). To improve the cycle characteristics and to obtain high input-output characteristics, an active material containing silicon and oxygen is produced and an active material layer having a higher oxygen proportion is formed near a current collector (see Patent Document 3, for example). To improve the cycle characteristics, a silicon active material containing oxygen is formed so as to have an average oxygen content of 40 at% or less and to have a large oxygen content near a current collector (see Patent Document 4, for example).

To improve a first charge-discharge efficiency, a nanocomposite containing a Si phase, $SiO_2$, and an $M_yO$ metal oxide is used (see Patent Document 5, for example). To improve the cycle characteristics, $SiO_x$ ($0.8 \leq x \leq 1.5$, particle size range = 1 um to 50 um) and a carbon material are mixed and calcined at high temperature (see Patent Document 6, for example). To improve the cycle characteristics, a mole ratio of oxygen to silicon in a negative electrode active material is set to 0.1 to 1.2 to control the active material within a range that a difference between a maximum and minimum of the mole ratio near an interface between the active material and a current collector is 0.4 or less (see Patent Document 7, for example). To improve battery load characteristics, a metal oxide containing lithium is used (see Patent Document 8, for example). To improve the cycle characteristics, a hydrophobic layer such as a silane compound is formed on a surface layer of a silicon material (see Patent Document 9, for example).

To improve the cycle characteristics, silicon oxide is used, and a graphite coating is formed on a surface layer of the silicon oxide to impart conductivity (see Patent Document 10, for example). In Patent Document 10, shift values obtained from a RAMAN spectrum on the graphite coating are as follows: broad peaks appear at 1330 cm$^{-1}$ and 1580 cm$^{-1}$ and an intensity ratio thereof $I_{330}/I_{580}$ satisfies $1.5 < I_{1330}/I_{1580} < 3$. To achieve a high battery capacity and to improve the cycle characteristics, particles having a silicon fine particle phase dispersed in silicon dioxide is used (see Patent Document 11, for example). To improve overcharge and overdischarge characteristics, a silicon oxide with regulated atom number ratio between silicon and oxygen of $1:y$ ($0 < y < 2$) is used (see Patent Document 12, for example).

As a lithium-ion secondary battery using silicon oxide, Hitachi Maxell, Ltd. started to ship rectangular secondary batteries adopting a nano-silicon composite for smartphones in June, 2010 (see Non Patent Document 1, for example). Silicon oxide proposed by Hohl is a composite material of $Si^{0+}$ to $Si^{4+}$, which has various oxidation states (Non Patent Document 2). Kapaklis proposes a disproportionation structure in which a thermal load is applied to an silicon oxide to cause separation into Si and $SiO_2$ (Non Patent Document 3).

In silicon oxides having the disproportionation structure, Miyachi, et al. focus on Si and $SiO_2$ that contribute to charge and discharge (Non Patent Document 4), and Yamada, et al. propose a reaction formula between the silicon oxide and Li as follows (Non Patent Document 5).

$$2SiO(Si+SiO_2) + 6.85Li^+ + 6.85e^- \rightarrow 1.4Li_{3.75}Si + 0.4Li_4SiO_4 + 0.2SiO_2$$

In the reaction formula, Si and $SiO_2$ that constitute the silicon oxide react with Li, and separated into Li silicide, Li silicate, and partially unreacted $SiO_2$.

The Li silicate generated here is irreversible, and is a stable substance that releases no Li after formed once. A capacity per mass calculated from this reaction formula is near an experimental value, and this reaction formula is recognized as a reaction mechanism of the silicon oxide. Kim, et al. have identified the Li silicate, the irreversible component of the silicon oxide with charge and discharge, as $Li_4SiO_4$ by using $^7$Li-MAS-NMR and $^{29}$Si-MAS-NMR (Non Patent Document 6). This irreversible capacity is most disadvantageous for the silicon oxide, which is required to be improved. Accordingly, Kim, et al. use a Li pre-doping method in which the Li silicate is formed in advance to produce a negative electrode having remarkably improved first efficiency as a battery and being durable for practical use (Non Patent Document 7).

A method in which the electrode is not doped with Li but a powder is treated is also proposed, which achieves improvement of the irreversible capacity (Patent Document 13) .

CITATION LIST

PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A

NON PATENT LITERATURE

Non Patent Document 1: Journal of BATTERY ASSOCIATION OF JAPAN "Denchi", May 1, 2010, p10.
Non Patent Document 2: A. Hohl, T. Wieder, P. A. van Aken, T. E. Weirich, G. Denninger, M. Vidal, S. Oswald, C. Deneke, J. Mayer, and H. Fuess: J. Non-Cryst. Solids, 320, (2003), 255.
Non Patent Document 3: V. Kapaklis, J. Non-Crystalline Solids, 354, (2008), 612.

Non Patent Document 4: Mariko Miyachi, Hironori Yamamoto, and Hidemasa Kawai, J. Electrochem. Soc. 2007 volume 154, issue 4, A376-A380.

Non Patent Document 5: M. Yamada et al, M. Inaba, A. Ueda, K. Matsumoto, T. Iwasaki, T. Ohzuku, J. Electrochem. Soc., 159, A1630, (2012).

Non Patent Document 6: Taeahn Kim, Sangjin Park, and Seung M. Oh, J. Electrochem. Soc. volume 154, (2007), A1112-A1117 .

Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi, Nano Lett. 2016, 16, 282-288.

## SUMMARY OF INVENTION

### TECHNICAL PROBLEM

As noted above, the small-sized electronic devices represented by mobile terminals have had higher performance and more functions in recent years, and the lithium-ion secondary battery, which is a main power source therefor, has required to increase the battery capacity. As one technique to solve this problem, there has been a demand for development of a lithium-ion secondary battery composed of a negative electrode using a silicon material as a main material.

The lithium-ion secondary battery using the silicon material is desired to have battery characteristics comparable to those of a lithium-ion secondary battery using a carbon material. Accordingly, silicon oxide modified by inserting and partially abstracting Li has been used as a negative electrode active material to improve a cycle retention rate and first efficiency of the battery. However, since modified by using Li, the modified silicon oxide has relatively low water resistance. This causes insufficient stabilization of a slurry containing the modified silicon oxide produced in manufacturing the negative electrode, and gas may be generated due to change with time of the slurry, or particles of the silicon oxide and a binder component may be aggregated to sediment (precipitate). Thus, there is a problem that an apparatus, etc. conventionally and commonly used for applying the carbon-based active material cannot be used or difficult to be used in some cases. When the silicon oxide with improved initial efficiency and cycle retention rate by modification using Li is used as above, the slurry containing water has insufficient stability, and the negative electrode active material for a non-aqueous secondary battery that is advantageous for industrial production of secondary batteries has not been proposed.

The present invention has been made in view of the above problems. An object of the present invention is to provide a negative electrode active material having high stability as the aqueous slurry, having a high capacity, and yielding good cycle characteristics and initial efficiency.

In addition, an object of the present invention is to provide a method for manufacturing a negative electrode active material having high stability as the aqueous slurry, having a high capacity, and yielding good cycle characteristics and first efficiency.

### SOLUTION TO PROBLEM

To achieve the above object, the present invention provides a negative electrode active material for a lithium-ion secondary battery, comprising negative electrode active material particles, wherein

the negative electrode active material particles contain silicon compound particles composed of a silicon compound containing lithium and oxygen,
a ratio between oxygen and silicon that constitute the silicon compound particles satisfies SiOx : $0.8 \leq X \leq 1.2$,
at least a part of Li that constitutes the silicon compound particles is $Li_2SiO_3$,
the silicon compound particles have a crystallite size of 10 nm or less, the crystallite size being derived from a Si (111) crystal face obtained by X-ray diffraction using CuKα radiation,
at least a part of surfaces of the silicon compound particles is coated with a carbon coating,
the negative electrode active material particles contain lithium carbonate,
at least a part of the lithium carbonate has crystallinity, and
in the negative electrode active material particles, a peak height P1 derived from at least a part of lithium carbonate and a peak height P2 derived from at least a part of $Li_2SiO_3$ satisfy a relationship of $2 \leq P2/P1 \leq 3.5$, the peak of P1 appearing within a range of a diffraction angle 2Θ of 20 to 21° and the peak of P2 appearing within a range of the diffraction angle 2Θ of 17 to 20° with X-ray diffraction using CuKα radiation.

Since the inventive negative electrode active material contains the negative electrode active material particles containing the silicon compound particles (which may be referred to as the silicon-based active material particles), the battery capacity can be improved. The silicon compound particles containing $Li_2SiO_3$ as a Li compound can reduce an irreversible capacity generated with charge. This reduction can improve the first efficiency and cycle characteristics of the battery. Furthermore, since the inventive negative electrode active material contains lithium carbonate in addition to the silicon compound particles, Li ions eluted from the silicon compound particles, etc. in the aqueous slurry when the negative electrode active material is mixed in the aqueous slurry in a process of manufacturing the negative electrode partially reacts with lithium carbonate particles in the presence of lithium carbonate to form a coating on surfaces of the negative electrode active material particles, resulting in inhibition of a reaction between Li ions and water to improve the slurry stability. The ratio of the above peak heights can yield a better effect of the slurry stability. The crystallite size derived from the Si (111) crystal face obtained by X-ray diffraction using CuKα radiation of 10 nm or less can improve the battery characteristics and can generate the stable Li compound.

In this case, the crystallite size derived from the Si (111) crystal face obtained by X-ray diffraction using CuKα radiation is preferably 8 nm or less. The crystallite size derived from the Si (111) crystal face obtained by X-ray diffraction using CuKα radiation preferably exhibits substantially an amorphous state.

As above, the low crystallinity of the Si crystals further effectively improves the battery characteristics, and can generate the stable Li compound.

An outermost layer of the negative electrode active material particles is preferably coated with a composite containing C, N, and O.

The negative electrode active material coated with such a composite can reduce a contacting area between Li ions and water to increase the slurry stability.

A total amount of the lithium carbonate present in the negative electrode active material particles is preferably within a range of 0.5 mass% or more and 2.5 mass% or less relative to a total amount of the negative electrode active material particles.

Within such a mass range, lithium carbonate has appropriate reactivity with Li ions, and thereby the slurry stability can be further improved.

In the negative electrode active material particles, the peak height P2 derived from at least a part of $Li_2SiO_3$ and a peak height P3 derived from the Si (111) crystal face preferably satisfy a relationship of 2.5≤P2/P3≤4, the peak of P2 appearing within the range of the diffraction angle 2Θ of 17 to 20° and the peak of P3 appearing within a range of the diffraction angle 2Θ of 44 to 50° in X-ray diffraction using CuKα radiation.

Such a ratio of the peak heights increases the battery capacity, and can sufficiently yield the effect of the slurry stability.

The negative electrode active material particles preferably further contain aluminum phosphate.

As above, the negative electrode active material particles containing aluminum phosphate allow Li ions eluted into the aqueous slurry to react with aluminum, resulting in formation of a coating on the surfaces of the negative electrode active material particles to improve the slurry stability.

In the negative electrode active material particles, a peak height P4 derived from at least a part of aluminum phosphate and the peak height P2 derived from at least a part of $Li_2SiO_3$ preferably satisfy a relationship of 1.5≤P2/P4≤4, the peak of P4 appearing within a range of the diffraction angle 2Θ of 21 to 23° and the peak of P2 appearing within the range of the diffraction angle 2Θ of 17 to 20° in X-ray diffraction using CuKα radiation.

Such a ratio of the peak heights can improve the slurry stability.

A dispersion in which the negative electrode active material particles are dispersed at a proportion of 10 mass% in pure water at 25°C preferably exhibits a value of pH of 10 or higher and 12.5 or lower.

When the pH of the dispersion measured as above is within the above rage, the slurry stability can be further improved.

A proportion of primary particles having a particle size of 1 um or less in primary particles of the silicon compound particles is preferably 5% or less on a volumetric basis.

When the proportion of the primary particles having a particle size of 1 um or less is within the above range, the increase in a surface area per mass can inhibit an increase in the irreversible capacity of the battery.

A median diameter of the negative electrode active material particles is preferably 4.0 um or more and 15 um or less.

When the median diameter of the negative electrode active material particles is 4.0 um or more as above, the increase in the reversible capacity can be inhibited. Meanwhile, setting the median diameter to 15 um or less is preferable because the particles hardly crack and a new surface is hardly generated.

The present invention also provides a negative electrode comprising the above negative electrode active material.

With such a negative electrode, the negative electrode active material having high stability of the aqueous slurry can be used to form the negative electrode.

The present invention also provides a method for manufacturing a negative electrode active material for a lithium-ion secondary battery comprising a negative electrode active material, the method comprising the steps of:

producing silicon compound particles containing a silicon compound;

coating at least a part of the silicon compound particles with a carbon layer;

inserting Li into the silicon compound particles for allowing the silicon compound particles to contain $Li_2SiO_3$; and

blending lithium carbonate at least partially having crystallinity into the produced negative electrode active material particles, wherein

in blending lithium carbonate, the lithium carbonate is blended so that, in the negative electrode active material particles, a peak height P1 derived from at least a part of lithium carbonate and a peak height P2 derived from at least a part of $Li_2SiO_3$ satisfy a relationship of $2 \leq P2/P1 \leq 3.5$, the peak of P1 appearing within a range of a diffraction angle $2\Theta$ of 20 to 21° and the peak of P2 appearing within a range of the diffraction angle $2\Theta$ of 17 to 20° with X-ray diffraction using $CuK\alpha$ radiation.

As above, lithium carbonate blended with the negative electrode active material particles containing the Li-inserted silicon compound particles to manufacture the negative electrode active material can stabilize the aqueous slurry produced in producing the negative electrode, and can manufacture the negative electrode active material that has a high capacity and good cycle characteristics and initial charge-discharge characteristics when used as the negative electrode active material of a secondary battery.

ADVANTAGEOUS EFFECTS OF INVENTION

The inventive negative electrode active material can stabilize the aqueous slurry produced in producing the negative electrode, and can yield a high capacity and good cycle characteristics and initial charge-discharge characteristics when used as the negative electrode active material of a lithium-ion secondary battery. In addition, a mixed negative electrode active material containing this negative electrode active material also yields the same effect. The inventive method for manufacturing the negative electrode active material can stabilize the aqueous slurry produced in producing the negative electrode, and can manufacture the negative electrode active material having good cycle characteristics and initial charge-discharge characteristics when used as the negative electrode active material of a lithium-ion secondary battery.

BRIEF DESCRIPTION OF DRAWINGS

FIG. 1 is a sectional view illustrating an example of constitution of a negative electrode for a lithium-ion secondary battery containing the inventive negative electrode active material.

FIG. 2 is an example of an X-ray diffraction chart, using $CuK\alpha$ radiation, measured on negative electrode active material particles (silicon-based negative electrode active material particles containing lithium carbonate) contained in the inventive negative electrode active material.

FIG. 3 is a view illustrating a constitution example of a lithium-ion secondary battery containing the inventive negative electrode active material (laminated film type).

DESCRIPTION OF EMBODIMENTS

Hereinafter, embodiments of the present invention will be described, but the present invention is not limited thereto.

As noted above, investigated as one technique for increasing the battery capacity of the lithium-ion secondary battery is use of the negative electrode mainly using the silicon-based active material as the negative electrode of the lithium-ion secondary battery. This lithium-ion secondary battery using the silicon-based active material is desired to have slurry stability, initial charge-discharge characteristics, and cycle characteristics nearly comparable to those of a lithium-ion secondary battery using a carbon-based active material, but the silicon-based active material having the slurry stability, initial charge-discharge characteristics, and cycle characteristics comparable to those of the lithium-ion secondary battery using a carbon-based active material has not been proposed.

The present inventors have made earnest study to obtain the silicon-based negative electrode active material that yields a high battery capacity and good slurry stability, cycle characteristics, and first efficiency when used for the lithium-ion secondary battery. This study has led the present invention.

The inventive negative electrode active material is a negative electrode active material for a lithium-ion secondary battery comprising negative electrode active material particles, wherein the negative electrode active material particles contain silicon compound particles composed of a silicon compound containing lithium and oxygen, a ratio between oxygen and silicon that constitute the silicon compound particles satisfies SiOx : $0.8 \leq X \leq 1.2$, at least a part of Li that constitutes the silicon compound particles is $Li_2SiO_3$, the silicon compound particles have a crystallite size of 10 nm or less, the crystallite size being derived from a Si (111) crystal face obtained by X-ray diffraction using $CuK\alpha$ radiation, at least a part of surfaces of the silicon compound particles is coated with a carbon coating, the negative electrode active material particles contain lithium carbonate, at least a part of the lithium carbonate has crystallinity, and in the negative electrode active material particles, a peak height P1 derived from at least a part of lithium carbonate and a peak height P2 derived from at least a part of $Li_2SiO_3$ satisfy a relationship of $2 \leq P2/P1 \leq 3.5$, the peak of P1 appearing within a range of a diffraction angle $2\Theta$ of 20 to 21° and the peak of P2 appearing within a range of the diffraction angle $2\Theta$ of 17 to 20° with X-ray diffraction using $CuK\alpha$ radiation.

As above, since the inventive negative electrode active material contains the negative electrode active material particles containing the silicon compound particles (silicon-based active material particles), the battery capacity can be improved. In addition, the silicon compound particles containing $Li_2SiO_3$ as a Li compound can reduce the irreversible capacity generated with charge. This reduction can improve the first efficiency and cycle characteristics of the battery. The crystallite size derived from the Si (111) crystal face obtained by X-ray diffraction using $CuK\alpha$ of 10 nm or less can improve the battery characteristics and generate the stable Li compound.

Furthermore, since the inventive negative electrode active material contains lithium carbonate in addition to the silicon compound particles, Li ions eluted from the silicon compound particles, etc. in the aqueous slurry when the negative electrode active material is mixed in the aqueous slurry in a process of manufacturing the negative electrode partially reacts with lithium carbonate particles in the presence of lithium carbonate to form a coating on surfaces of the negative electrode active material particles, resulting in inhibition of a reaction between Li ions and water to improve the slurry stability. In the inventive negative electrode active material, the peak height P1 of the peak derived from lithium carbonate and the peak height P2 of the peak derived from $Li_2SiO_3$ in the X-ray diffraction satisfying the relationship of $2 \leq P2/P1 \leq 3.5$, as noted above, can yield a better effect of the slurry stability. If this ratio P2/P1 is less than 2, lithium carbonate accounts for a large proportion in the negative electrode active material to deteriorate the initial charge-discharge characteristics. If this ratio P2/P1 exceeds 3.5, it is difficult to uniformly disperse lithium carbonate in the negative electrode active material, leading to deterioration of the slurry stability.

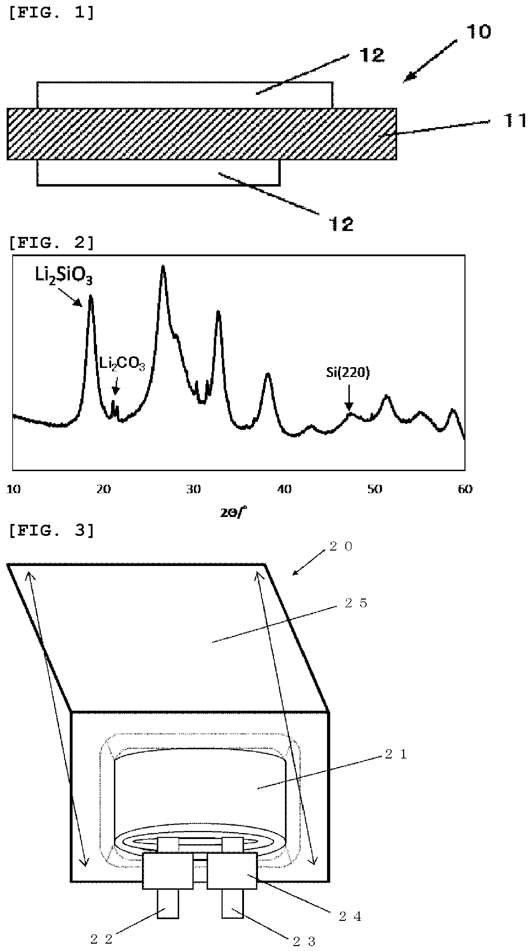

FIG. 2 shows an example of a chart of X-ray diffraction, using $CuK\alpha$ radiation, measured on the negative electrode active material particles (the silicon-based negative electrode active material particles containing lithium carbonate) contained in the inventive negative electrode active material. The peak height P1 derived from at least a part of lithium carbonate and the peak height P2 derived from at least a part of $Li_2SiO_3$ are needed to satisfy the above relationship. The peak of P1 appears within a range of a diffraction angle $2\Theta$ of 20 to 21° and the peak of P2 appears within a range of the diffraction angle $2\Theta$ of 17 to 20° in FIG. 2.

When a conventional negative electrode active material containing Li-inserted silicon compound particles is mixed in an aqueous slurry in producing the negative electrode, Li ions are eluted to destabilize the slurry, leading to difficulty in electrode production. On an electrode surface produced with such a slurry, an unnecessary Li compound is generated to deteriorate the battery characteristics such as the cycle characteristics and the first charge-discharge characteristics, in particular, considerably deteriorate the cycle characteristics. Meanwhile, the negative electrode active material containing lithium carbonate, as the present invention, can improve the slurry stability. As a result, the inventive negative electrode active material can improve the battery characteristics of the secondary battery such as the first efficiency and the cycle characteristics, in particular, remarkably improve the cycle characteristics, compared with the conventional negative electrode active material.

<1. Negative Electrode for Non-Aqueous Electrolyte Secondary Battery>

Subsequently, constitution of the negative electrode of the secondary battery containing the inventive negative electrode active material will be described.

Constitution of Negative Electrode

FIG. 1 illustrates a sectional view of the negative electrode containing the inventive negative electrode active material. As illustrated in FIG. 1, a negative electrode 10 has constitution having a negative electrode active material layer 12 on a negative electrode current collector 11. This negative electrode active material layer 12 may be provided on both surfaces or only one surface of the negative electrode current collector 11. The inventive negative electrode for a non-aqueous electrolyte secondary battery may not have the negative electrode current collector 11.

Negative Electrode Current Collector

The negative electrode current collector 11 is composed of a material having excellent conductivity and being superior in mechanical strength. Examples of the conductive material usable for the negative electrode current collector 11 include copper (Cu) and nickel (Ni). This conductive material is preferably a material that does not form an intermetallic compound with lithium (Li).

The negative electrode current collector 11 preferably contains carbon (C) and sulfur (S) in addition to the main elements. This is because physical strength of the negative electrode current collector is improved. Particularly when an active material layer expanding with charge is contained, the current collector containing the above element yields an effect of inhibiting deformation of the electrode having the current collector. A content of the above contained elements is not particularly limited, but preferably each 100 mass-ppm or less. This is because a higher effect of inhibiting the deformation can be obtained.

A surface of the negative electrode current collector 11 may be roughened, or may not be roughened. Examples of the roughened negative electrode current collector include a metal foil subjected to an electrolytic treatment, an emboss treatment, or a chemical etching. Examples of the unroughened negative electrode current collector include a rolled metal foil.

Negative Electrode Active Material Layer

The negative electrode active material layer 12 contains the inventive negative electrode active material (silicon-based active material), and may further contain a carbon-based active material, etc. in addition to the silicon-based active material, as the negative electrode active material. For battery design, other materials such as a thickener (which may be called as "binding agent" or "binder") and a conductive auxiliary may be contained. The negative electrode active material may have a particle shape.

As noted above, the inventive negative electrode active material contains the silicon compound particles containing the silicon compound containing oxygen. The ratio between silicon and oxygen constituting this silicon compound is needed to be within a range of SiOx : 0.8≤X≤1.2. X of 0.8 or more, which indicates a higher oxygen proportion than the silicon single substance, yields good cycle characteristics. X of 1.2 or less does not excessively increase resistance of the silicon oxide.

In the present invention, lower crystallinity of the silicon compound is better. Specifically, a size of a crystallite (crystallite size) is needed to 10 nm or less, and more desirably 8 nm or less. The crystallite size is determined with a Scherrer's equation based on a fullwidth at half maximum of a diffraction peak attributed to the Si (111) obtained by X-ray diffraction of the silicon compound particles using CuKα radiation. As above, the low crystallinity and the small existence amount of Si crystals can improve the battery characteristics and also can generate the stable Li compound. In particular, the crystallite size derived from the Si (111) crystal face obtained by X-ray diffraction using CuKα radiation preferably exhibits a substantial amorphous state. The "substantial amorphous state" can be defined as the peak fullwidth at half maximum being 1.2° or more. Although such a fullwidth at half maximum can be determined as a value with an analysis software, etc., Si is actually considered to be an amorphous state.

In the present invention, examples of the X-ray diffraction (CuKα) apparatus (XRD apparatus) with copper as a counter negative electrode include New D8 ADVANCE, manufactured by Bruker AXS GmbH. The size of the crystallite can be determined from the following Scherrer's equation based on the fullwidth at half maximum (FWHM). The fullwidth at half maximum is determined by performing an appropriate background treatment by using an analysis software having functions same as or more than an XRD analysis software of DIFFAC. EVA (manufactured by Bruker AXS GmbH).

$$L = K\lambda / (\beta \cos\theta)$$

L: crystallite size
β: fullwidth at half maximum: determined from a peak value by using a range within approximately β±5° (/2θ)
peak width: 2θ (47.5°)
peak spread 2Θ (measured fullwidth at half maximum - fullwidth at half maximum of metal Si 0.089°*)

* The fullwidth at half maximum of metal Si 0.089° differs depending on the XRD apparatus.
* The fullwidth at half maximum of metal Si is measured by using a crystalline Si without crystal strain.

The specific fullwidth at half maximum of the XRD apparatus is estimated with this measurement.

The fullwidth at half maximum derived from the crystallite size can be determined by subtracting the above full width at half maximum of Si from the measured fullwidth at half maximum.

λ: wavelength of used X-ray (0.154 nm)
K: Scherrer's coefficient: 0.9
θ: diffraction angle

Since such a negative electrode active material contains the negative electrode active material particles containing the silicon compound particles, the battery capacity can be improved. The silicon compound particles containing the lithium silicate as above can reduce the irreversible capacity generated with charge. When the proportion of primary particles having a particle size of 1 um or less in primary particles of the silicon compound particles is 5% or less on a volumetric basis, an existence amount of a fine powder of the silicon compound particles, which easily elutes lithium, is low, and thereby the elution of lithium ions from the negative electrode active material in producing the aqueous negative electrode slurry, etc. can be inhibited. As a result, the stability of the aqueous negative electrode slurry in producing the negative electrode is improved to improve the first efficiency and the cycle characteristics.

In the present invention, at least a part of Li constituting the silicon compound particles contained in the negative electrode active material particles is $Li_2SiO_3$. $Li_2SiO_3$ is one of lithium silicates. The silicon compound particles containing $Li_2SiO_3$ as the Li compound can reduce the irreversible capacity generated with charge. The silicon compound particles may contain Li silicate other than $Li_2SiO_3$. Since Li silicate is relatively more stable than other Li compounds, the silicon-based active material containing Li silicate can yield more stable battery characteristics. Li silicate can be obtained by selectively changing a part of a $SiO_2$ component generated inside the silicon compound particles to the Li compound to modify the silicon compound particles.

Among the Li silicates, $Li_4SiO_4$ is relatively easily dissolved in water, and easily eluted with forming the slurry when the aqueous slurry is used. Therefore, the Li compound contained in the silicon compound particles is preferably $Li_2SiO_3$, which is hardly dissolved in water and exhibits relatively stable behavior in the aqueous slurry compared with $Li_4SiO_4$.

In the negative electrode active material particles of the inventive negative electrode active material, the peak height P2 derived from at least a part of $Li_2SiO_3$ and a peak height P3 derived from the Si (111) crystal face preferably satisfy a relationship of $2.5 \leq P2/P3 \leq 4$. The peak of P2 appears within the range of the diffraction angle $2\Theta$ of 17 to 20°, and the peak of P3 appears within a range of the diffraction angle $2\Theta$ of 44 to 50° in X-ray diffraction using $CuK\alpha$ radiation. This ratio of the peak heights of 2.5 or more indicates Si crystal growth not excessively progress. Thus, Si is hardly exposed on the particle surface, and the slurry stability and the cycle characteristics are improved. This ratio of 4 or less indicates an appropriate proportion of $Li_2SiO_3$, and the initial charge-discharge characteristics are improved.

As noted above, the inventive negative electrode active material contains lithium carbonate in addition to the silicon compound particles. A content of the mixed lithium carbonate is preferably within a range of 0.5 mass% or more and 2.5 mass% or less relative to a total amount of the negative electrode active material particles. When this proportion is 0.5 mass% or more, lithium carbonate is easily dispersed uniformly in the negative electrode active material to improve the slurry stability. When this proportion is 2.5 mass% or less, the proportion of lithium carbonate is appropriate, and the initial charge-discharge characteristics are improved.

In the inventive negative electrode active material, a metal salt composed of an alkali metal or alkali earth metal other than lithium carbonate may be mixed. Examples of the alkali metal and alkali earth metal other than Li include Na, K, Mg, Ca, and Ba. Among the metal salts, the elements other than Li also preferably form a carbonate salt.

In the inventive negative electrode active material, an outermost layer of the negative electrode active material particles is preferably coated with a composite containing C, N, and O. The negative electrode active material coated with such a composite can reduce the contacting area between Li ions and water to improve the slurry stability. With this coating of the composite containing C, N, and O, fragments of C-, N-, and O-based compounds can be detected in a spectrum obtained by time-of-flight secondary ion mass spectrometry (TOF-SIMS). The coating of such a composite can be formed by a method described later, for example.

The negative electrode active material particles may contain a metal salt of phosphoric acid. The metal salt of phosphoric acid is preferably aluminum phosphate, but may be zirconium phosphate or molybdenum phosphate. The negative electrode active material particles containing the metal salt of phosphonic acid such as aluminum phosphate, as above, allows Li ions eluted to the aqueous slurry to react with the metal such as aluminum to form a coating on surfaces of the negative electrode active material particles, resulting in improvement of the slurry stability.

When the negative electrode active material contains aluminum phosphate as above, in the negative electrode active material particles, a peak height P4 derived from at least a part of aluminum phosphate and the peak height P2 derived from at least a part of $Li_2SiO_3$ preferably satisfy a relationship of $1.5 \leq P2/P4 \leq 4$. The peak of P4 appears within a range of the diffraction angle $2\Theta$ of 21 to 23°, and the peak of P2 appears within the range of the diffraction angle $2\Theta$ of 17 to 20° in X-ray diffraction using $CuK\alpha$ radiation. Such a ratio of the peak heights can improve the slurry stability. That is, when this ratio P2/P4 is 1.5 or more, the proportion of aluminum phosphate particles in the negative electrode active material is appropriate, and the initial charge-discharge characteristics are improved. When this ratio P2/P4 is 4 or less, lithium carbonate is easily dispersed uniformly in the negative electrode active material, resulting in improvement of the slurry stability.

In the inventive negative electrode active material, a dispersion in which the negative electrode active material particles are dispersed at a proportion of 10 mass% in pure water at 25°C preferably exhibits a value of pH of 10 or higher and 12.5 or lower.

The pH of the aqueous negative electrode slurry composition of 10 or higher does not promote elution of the silicate salt contained in the silicon compound particles, and thereby the slurry stability can be further improved. The pH of 12.5 or lower can inhibit decomposition of the binder component, and thereby a decrease in a viscosity can be inhibited.

A median diameter of the negative electrode active material particles is preferably 4.0 um or more and 15 um or less. The median diameter of the negative electrode active material particles of 4.0 um or more as above can inhibit an increase in the reversible capacity. Meanwhile, setting the median diameter to 15 um or less is preferable because the particles hardly crack to hardly generate a new surface.

Method for Manufacturing Negative Electrode

Subsequently, an example of a method for manufacturing a negative electrode of a non-aqueous electrolyte secondary battery will be described.

First, a negative electrode active material to be contained in a negative electrode is manufactured. The negative electrode active material can be manufactured by the inventive manufacturing method as follows.

First, silicon compound particles containing a silicon compound are manufactured. In this time, the silicon compound contains silicon and oxygen, and the ratio is preferably SiOx : $0.8 \leq X \leq 1.2$. Then, at least a part of the silicon compound particles is coated with a carbon layer. Thereafter, Li is inserted into the silicon compound particles to allow the silicon compound particles to contain $Li_2SiO_3$. In this time, a part of Li inserted into the silicon compound particles may be abstracted. Then, lithium carbonate having at least partially crystallinity is blended with the produced negative electrode active material particles. In this time, in blending lithium carbonate, the lithium carbonate is blended so that, in the negative electrode active material particles, a peak height P1 derived from at least a part of lithium carbonate and a peak height P2 derived from at least a part of $Li_2SiO_3$ satisfy a relationship of $2 \leq P2/P1 \leq 3.5$, the peak of P1 appearing within a range of a diffraction angle $2\Theta$ of 20 to 21° and the peak of P2 appearing within a range of the diffraction angle $2\Theta$ of 17 to 20° with X-ray diffraction using CuKα radiation. Furthermore, this negative electrode active material can be mixed with a conductive auxiliary or a binder to manufacture a negative electrode material and a negative electrode.

More specifically, the inventive negative electrode active material is manufactured by the following procedure, for example.

To produce the silicon compound particles containing the silicon compound (SiOx : $0.8 \leq X \leq 1.2$), a raw material to generate silicon oxide gas is firstly heated in the presence of an inert gas or under a reduced pressure within a temperature range of 900°C to 1600°C to generate silicon oxide gas. In this time, the raw material is a mixture of a metal silicon powder and a silicon dioxide powder. Si crystallites in the produced particles are regulated by changing a feeding range or the gasifying temperature, or performing a heat treatment after the production. The generated gas is deposited on an absorbent plate. The deposited product is taken out in a state where a temperature in a reaction furnace is lowered to 100°C or lower, and crushed and powdered by using a ball mill, a jet mill, etc.

Then, on a surface layer of the obtained powder material (being the silicon compound particles and silicon oxide particles), a carbon coating layer is formed. The carbon coating layer is effective to further improve the battery characteristics of the negative electrode active material.

A technique for forming the carbon coating layer on the surface layer of the powder material is desirably pyrolytic CVD. In the pyrolytic CVD, the powder material is set in a furnace, and the furnace is filled with a hydrocarbon gas and a temperature in the furnace is raised. The decomposition temperature is not particularly limited, but particularly desirably 1200°C or lower. The decomposition temperature is more desirably 950° C or lower, which can inhibit unintended disproportionation of the silicon oxide. The hydrocarbon gas is not particularly limited, but desirably has $C_nH_m$ composition wherein $3 \geq n$. This is because of a low manufacturing cost and good physical properties of the decomposed product.

Then, Li is inserted into the silicon compound particles to modify the silicon compound particles. In the present invention, this Li insertion allows the silicon compound particles to contain $Li_2SiO_3$. For modifying the silicon compound particles in the present invention, an electrochemical technique, a modification technique with an oxidation-reduction reaction, etc. can be used.

As the modification with the oxidation-reduction method, for example, the silicon-based active material particles can be firstly immersed in a solution A in which lithium is dissolved in an ether solvent to insert lithium. Into this solution A, a polycyclic aromatic compound or a linear polyphenylene compound may be contained. The obtained silicon-based active material particles can be heat-treated at 400°C or higher and 700°C or lower to stabilize the Li compound. This heat treatment allows a decomposed product of the solvent and nitrogen to react to form a coating of a composite composed of C, N, and O on an outermost layer of the negative electrode active material. This heat treatment temperature of 400°C or higher stabilizes Li silicate to easily function as the irreversible component with charge and discharge, resulting in improvement of the initial charge-discharge characteristics. This heat treatment temperature of 700°C or lower does not promote crystal growth of Si, and thereby the slurry stability and the cycle characteristics can be improved. After the insertion of lithium, the silicon-based active material particles may be immersed in a solution B containing a polycyclic aromatic compound or a derivative thereof to abstract active lithium from the silicon-based active material particles. As the solvent of this solution B, an ether solvent, a ketone solvent, an ester solvent, an alcohol solvent, an amine solvent, or a mixed solvent thereof can be used, for example.

As the ether solvent used for the solution A, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, a mixed solvent thereof, etc. can be used. Among these, tetrahydrofuran, dioxane, 1,2-dimethoxyethane, or diethylene glycol dimethyl ether is preferably used. These solvents are preferably dehydrated, and preferably deoxygenated.

As the polycyclic aromatic compound contained in the solution A, one or more of naphthalene, anthracene, phenanthrene, naphthacene, pentacene, pyrene, triphenylene, coronene, chrysene, and a derivative thereof can be used. As the liner polyphenylene compound, one or more of biphenyl, terphenyl, and a derivative thereof can be used.

As the polycyclic aromatic compound contained in the solution B, one or more of naphthalene, anthracene, phenanthrene, naphthacene, pentacene, pyrene, triphenylene, coronene, chrysene, and a derivative thereof can be used.

As the ether solvent used for the solution B, diethyl ether, tert-butyl methyl ether, tetrahydrofuran, dioxane, 1,2-dimethoxyethane, diethylene glycol dimethyl ether, triethylene glycol dimethyl ether, tetraethylene glycol dimethyl ether, a mixed solvent thereof, etc. can be used.

As the ketone solvent, acetone, acetophenone, etc. can be used.

As the ester solvent, methyl formate, methyl acetate, ethyl acetate, propyl acetate, isopropyl acetate, etc. can be used.

As the alcohol solvent, methanol, ethanol, propanol, isopropyl alcohol, etc. can be used.

As the amine solvent, methylamine, ethylamine, ethylenediamine, etc. can be used.

Subsequently, lithium carbonate having at least partially crystallinity is blended with the produced negative electrode active material particles to manufacture the negative electrode active material. Lithium carbonate used in this time may have a particle shape, or a shape of an aggregate thereof. As a method for mixing lithium carbonate, dry mixing such as stirring mixing, rolling mixing, and shearing mixing may be used, or wet mixing in which lithium carbonate particles dispersed in a solution are sprayed to the negative electrode active material particles may be used. In the present invention, this lithium carbonate is blended so that, in the negative electrode active material particles, a peak height P1 derived from at least a part of lithium carbonate and a peak height P2 derived from at least a part of $Li_2SiO_3$ satisfy a relationship of $2 \leq P2/P1 \leq 3.5$, the peak of P1 appearing within a range of a diffraction angle $2\Theta$ of 20 to 21° and the peak of P2 appearing within a range of the diffraction angle $2\Theta$ of 17 to 20° with X-ray diffraction using CuK$\alpha$ radiation, as noted above. Specifically, the above blending can be achieved by changing an amount of lithium carbonate in mixing.

In this time, a metal salt composed of an alkali metal or an alkali earth metal other than lithium carbonate can be mixed in the similar technique.

In this time, a metal salt of phosphoric acid may be additionally blended. The metal salt of phosphoric acid is preferably aluminum phosphate, but may be zirconium phosphate or molybdenum phosphate. Also, as a method for mixing the metal salt of phosphoric acid, dry mixing such as stirring mixing, rolling mixing, and shearing mixing may be used, or wet mixing in which the metal salt particles of phosphoric acid dispersed in a solution is sprayed to the negative electrode active material particles may be used.

Into the negative electrode active material produced as above, other materials such as a negative electrode binding agent and a conductive auxiliary are also mixed as necessary, and then an organic solvent, water, etc. is added to form a slurry. Then, as illustrated in FIG. 1, this negative electrode mixture slurry is applied on a surface of the negative electrode current collector 11, and dried to form the negative electrode active material layer 12. In this time, heat pressing, etc. may be performed as necessary. As above, the inventive negative electrode of a non-aqueous electrode secondary battery can be manufactured.

<2. Lithium-Ion Secondary Battery>

Next, a lithium-ion secondary battery containing the inventive negative electrode active material will be described. Here, a laminated film-type lithium-ion secondary battery will be exemplified as a specific example.

Constitution of Laminated Film-Type Lithium-Ion Secondary Battery

In a laminated film-type lithium-ion secondary battery 20 illustrated in FIG. 3, a wound electrode assembly 21 is housed inside an exterior member 25 mainly having a sheet. This wound electrode assembly 21 has a separator between a positive electrode and a negative electrode, which are wound. The wound electrode assembly may have the separator between the positive electrode and the negative electrode, and its laminate is housed in some cases. In any of the electrode assemblies, a positive electrode lead 22 is attached to the positive electrode, and a negative electrode lead 23 is attached to the negative electrode. An outermost periphery of the electrode assembly is protected with a protective tape.

The positive and negative electrode leads 22 and 23 are drawn out in one direction from an inside to outside of the exterior member 25, for example. The positive electrode lead 22 is formed with a conductive material such as, for example, aluminum. The negative electrode lead 23 is formed with a conductive material such as, for example, nickel and copper.

The exterior member 25 is, for example, a laminated film in which a fusion layer, a metal layer, and a surface-protective layer are laminated in this order. Two of these laminated films are laminated by fusion or an adhesive at outer peripheries of the fusion layers thereof so that the fusion layer is opposite to the electrode assembly 21. The fused portion is, for example, a film of polyethylene, polypropylene, etc., and the metal portion is an aluminum foil, etc. The protective film is of, for example, nylon.

Between the exterior member 25 and the positive and negative electrode leads, an adhesion film 24 is inserted in order to prevent penetration of outside air. A material thereof is, for example, polyethylene, polypropylene, or a polyolefin resin.

Positive Electrode

The positive electrode has, for example, a positive electrode active material layer on both surfaces or one surface of a positive electrode current collector, similarly to the negative electrode 10 in FIG. 1.

The positive electrode current collector is formed with a conductive material such as, for example, aluminum.

The positive electrode active material layer contains any one or two or more of positive electrode materials that can occlude and release lithium ions, and may contain other materials such as a positive electrode binding agent, a positive electrode conductive auxiliary, and a dispersant according to design. In this case, details about the positive electrode binding agent and the positive electrode conductive auxiliary are same as the aforementioned negative electrode binding agent and the negative electrode conductive auxiliary, for example.

The positive electrode material is desirably a lithium-containing compound. Examples of this lithium-containing compound include a composite oxide composed of lithium and a transition metal element, or a phosphate compound containing lithium and a transition metal element. Among these positive electrode materials, a compound containing at least one or more of nickel, iron, manganese, and cobalt is preferable. These compounds are represented by a chemical formula of $Li_xM_1O_2$ or $Li_yM_2PO_4$, for example. In the formulae, $M_1$ and $M_2$ represent at least one or more transition metal elements. The values of "x" and "y", which differ depending on a charge-discharge state of the battery, typically represent $0.05 \leq x \leq 1.10$ and $0.05 \leq y \leq 1.10$.

Examples of the composite oxide containing lithium and the transition metal element include lithium-cobalt composite oxide ($Li_xCoO_2$), lithium-nickel composite oxide ($Li_xNiO_2$), and lithium-nickel-cobalt composite oxide. Examples of the lithium-nickel-cobalt composite oxide include lithium-nickel-cobalt-aluminum composite oxide (NCA) and lithium-nickel-cobalt-manganese composite oxide (NCM).

Examples of the phosphate compound containing lithium and the transition metal element include lithium iron phosphate compound ($LiFePO_4$) or lithium iron manganese phosphate compound ($LiFe_{1-u}Mn_uPO_4$ (0<u<1)). Using these positive electrode materials can yield a high battery capacity and excellent cycle characteristics.

Negative Electrode

The negative electrode has construction similar to that of the aforementioned negative electrode 10 for a lithium-ion secondary battery in FIG. 1. The negative electrode has negative electrode active material layers 12 on both surfaces of a current collector 11, for example. This negative electrode preferably has a large negative electrode charge capacity relative to an electric capacity (charge capacity as a battery) obtained by the material for the positive electrode active material. This is because precipitation of lithium metal on the negative electrode can be inhibited.

The positive electrode active material layers are provided on a part of both the surfaces of the positive electrode current collector, and similarly, the negative electrode active material layers are also provided on a part of both the surfaces of the negative electrode current collector. In this case, on the negative electrode active material layer provided on the negative electrode current collector, a region where the opposite positive electrode active material layer is absent is provided, for example. This is to design a stable battery.

The non-opposite region, namely the region where the negative electrode active material layer and the positive electrode active material layer are not opposite, is almost no affected by charge and discharge. Thus, a state of the negative electrode active material layer immediately after the formation is retained as it is. Accordingly, a composition of the negative electrode active material, etc. can be accurately determined with good reproducibility independently on whether charge and discharge are performed.

Separator

The separator separates the positive electrode and the negative electrode, prevents current short circuit due to contacting of both the electrodes, and enables lithium ions to permeate. This separator is formed with a porous film composed of, for example, a synthetic resin or ceramic. The separator may have a laminated structure in which two types or more of the porous films are laminated. Examples of the synthetic resin include polytetrafluoroethylene, polypropylene, and polyethylene.

Electrolyte Liquid

At least a part of the active material layer or the separator is impregnated with a liquid electrolyte (electrolyte liquid). This electrolyte liquid dissolves an electrolyte salt in a solvent, and may contain other materials such as additives.

As the solvent, a non-aqueous solvent can be used, for example. Examples of the non-aqueous solvent include ethylene carbonate, propylene carbonate, butylene carbonate, dimethyl carbonate, diethyl carbonate, ethyl methyl carbonate, methyl propyl carbonate, 1,2-dimethoxyethane, or tetrahydrofuran. Among these, at least one or more of ethylene carbonate, propylene carbonate, dimethyl carbonate, diethyl carbonate, and ethyl methyl carbonate are desirably used. This is because better characteristics can be obtained. In this case, a combination of: a solvent with high viscosity, such as ethylene carbonate and propylene carbonate; and a solvent with low viscosity, such as dimethyl carbonate, ethyl methyl carbonate, and diethyl carbonate can yield more advantageous characteristics. This is because dissociation ability and ion mobility of the electrolyte salt are improved.

When an alloy-type negative electrode is used, the solvent desirably contains at least one of a halogenated chain carbonate ester or a halogenated cyclic carbonate ester. This forms a stable coating on the surface of the negative electrode active material with charge and discharge, particularly with charge. Here, the halogenated chain carbonate ester refers to a chain carbonate ester having a halogen as a constituent element (at least one hydrogen is substituted with a halogen). The halogenated cyclic carbonate ester refers to a cyclic carbonate ester having a halogen as a constituent element (that is, at least one hydrogen is substituted with a halogen).

The type of halogen is not particularly limited, but preferably fluorine. This is because the coating with better quality is formed compared with other halogens. A larger number of the halogen is better. This is because the obtained coating becomes more stable, and a decomposition reaction of the electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolan-2-one and 4,5-difluoro-1,3-dioxolan-2-one.

The electrolyte liquid preferably contains an unsaturated carbon bond cyclic carbonate ester as the solvent additive. This is because a stable coating is formed on a surface of the negative electrode with charge and discharge to inhibit the decomposition reaction of the electrolyte liquid. Examples of the unsaturated carbon bond cyclic carbonate ester include vinylene carbonate or vinylethylene carbonate.

The electrolyte liquid preferably contains a sultone (cyclic sulfonate ester) as the solvent additive. This is because chemical stability of the battery is improved. Examples of the sultone include propane sultone and propene sultone.

The solvent preferably contains an acid anhydride. This is because chemical stability of the electrolyte liquid is improved. Examples of the acid anhydride include propanedisulfonic anhydride.

The electrolyte salt may contain any one or more of a light metal salt such as a lithium salt, for example. Examples of the lithium salt include lithium hexafluorophosphate ($LiPF_6$) and lithium tetrafluoroborate ($LiBF_4$).

A content of the electrolyte salt is preferably 0.5 mol/kg or more and 2.5 mol/kg or less relative to the solvent. This is because high ion conductivity can be obtained.

Method for Manufacturing Laminated Film-Type Secondary Battery

The present invention can produce the negative electrode by using the negative electrode active material manufactured by the aforementioned inventive method for manufacturing a negative electrode active material, and can manufacture a lithium-ion secondary battery by using the produced negative electrode.

Method for Manufacturing Laminated Film-Type Secondary Battery

First, the positive electrode is manufactured by using the aforementioned positive electrode material. The positive electrode active material and, as necessary, the positive electrode binding agent, the positive electrode conductive auxiliary, etc. are firstly mixed to form a positive electrode mixture, and then the positive electrode mixture is dispersed in an organic solvent to form a positive electrode mixture slurry. Subsequently, the mixture slurry is applied on the positive electrode current collector with a coating apparatus, such as a knife roll or a die coater having a die head, and dried with hot blowing to obtain the positive electrode active material layer. Finally, the positive electrode active material layer is subjected to compressive formation with a roll-pressing machine, etc. In this time, heating may be performed, or heating or compressing may be repeated a plurality of times.

Then, by using the operation procedure same as the aforementioned production of the negative electrode 10 for a lithium-ion secondary battery, the negative electrode active material layer is formed on the negative electrode current collector to produce the negative electrode.

When the positive electrode and the negative electrode are produced, each of the active material layers is formed on both the surfaces of the positive and negative electrode current collectors. In this time, a length of the applied active material on both the surfaces may be shifted in both the electrodes (see FIG. 1).

Then, the electrolyte liquid is prepared. Subsequently, the positive electrode lead 22 is attached to the positive electrode current collector, and the negative electrode lead 23 is attached to the negative electrode current collector by ultrasonic welding, etc. (see FIG. 3). Then, the positive electrode and the negative electrode are laminated or wound via the separator to produce the wound electrode assembly 21, and a protective tape is bonded to the outermost periphery of the wound electrode assembly 21. Then, the wound product is molded so as to have a flat shape. Subsequently, the wound electrode assembly is sandwiched between the folded film-shaped exterior member 25, thereafter insulating portions in the exterior member are bonded to each other by a thermal fusion method, and the wound electrode assembly is enclosed in an open state in only one direction. Subsequently, the adhesion film is inserted between: the positive electrode lead and the negative electrode lead; and the exterior member. Then, a predetermined amount of the electrolyte liquid prepared as above is fed through the opening, and vacuum impregnation is performed. After the impregnation, the opening is bonded by a vacuum thermal fusion method. As above, the laminated film-type lithium-ion secondary battery 20 can be manufactured.

EXAMPLES

Hereinafter, the present invention will be more specifically described with showing Examples and Comparative Examples of the present invention, but the present invention is not limited to these Examples.

(Example 1-1)

A laminated film-type lithium-ion secondary battery 20 illustrated in FIG. 3 was produced in the following procedure.

First, a positive electrode was produced. As for a positive electrode active material, 95 mass% of $LiNi_{0.7}Co_{0.25}Al_{0.05}O$ being a lithium-nickel-cobalt composite oxide, 2.5 mass% of a positive electrode conductive auxiliary (acetylene black), and 2.5 mass% of a positive electrode binding agent (polyvinylidene fluoride: PVDF) were mixed to form a positive electrode mixture. Subsequently, the positive electrode mixture was dispersed in an organic solvent (N-methyl-2-pyrrolidone: NMP) to form a paste slurry. Then, the slurry was applied on both surfaces of a positive electrode current collector with a coating apparatus having a die head, and the coating was dried with a hot-blow drying apparatus. In this time, the used positive electrode current collector had a thickness of 15 um. Finally, compressive formation was performed with a roll pressing.

Then, a negative electrode was produced. First, a negative electrode active material (silicon-based active material) was produced as follows. A raw material (gasification starting material) in which metal silicon and silicon dioxide were mixed was fed into a reaction furnace, gasified in an atmosphere at a vacuum degree of 10 Pa, and deposited on an absorbent plate. After sufficient cooling, the deposited product was taken out and crushed with a ball mill to obtain silicon compound particles. In primary particles of this silicon compound, a proportion of primary particles having a particle size of 1 um or less was 0% in a volumetric basis. As for the silicon compound particles obtained as above, a value of "x" of SiOx was 0.9. Subsequently, the particle size of the silicon compound particles was regulated by classification. Thereafter, thermal CVD was performed to coat surfaces of the silicon compound particles with a carbon material. A thickness of the carbon coating was 100 nm in average.

Subsequently, the silicon compound particles coated with the carbon coating (hereinafter, also referred to as "carbon-coated silicon compound particles") were subjected to lithium doping with an oxidation-reduction method as follows for inserting lithium into the silicon compound particles to perform modification.

First, the carbon-coated silicon compound particles were immersed in a solution (solution A) in which lithium piece and biphenyl being an aromatic compound were dissolved in diglyme. This solution A was produced by dissolving biphenyl in the diglyme solvent at a concentration of 10 mass% relative to the silicon compound particles with the carbon coating, and then adding lithium piece at a mass of 8 mass% relative to this silicon compound particles with the carbon coating. The carbon-coated silicon compound particles were immersed in the solution A at a temperature of 20°C for an immersion time of 6 hours. Thereafter, the carbon-coated silicon compound particles were recovered by filtration. As the above treatment, lithium was inserted into the carbon-coated silicon compound particles.

The obtained carbon-coated silicon compound particles were subjected to a heating treatment under an air atmosphere (that is, nitrogen-containing atmosphere) at 600° for 3 hours to stabilize the Li compound.

Then, the carbon-coated silicon compound particles were subjected to a washing treatment, and the carbon-coated silicon compound particles after the washing treatment were subjected to a drying treatment under a reduced pressure. As the washing treatment, the carbon-coated silicon compound particles were stirred in an alkaline aqueous solution for 2 hours. As above, the carbon-coated silicon compound particles were modified. By the above treatments, the carbon-coated silicon compound particles were produced.

Then, aluminum phosphate ($AlPO_4$) and lithium carbonate ($Li_2CO_3$) were mixed with the negative electrode active material particles. The lithium carbonate partially had crystallinity. This mixing yielded a negative electrode active material (silicon-based active material) containing the negative electrode active material particles (silicon-based active material particles). A mass proportion of lithium carbonate in this negative electrode active material was 1.5 mass%.

An X-ray diffraction pattern of the negative electrode active material obtained as above was measured by using $CuK\alpha$ radiation to demonstrate that a crystallite size of fine crystals was 7 nm. The crystallite size was determined with the Scherrer's equation based on a fullwidth at half maximum of a diffraction peak attributed to the Si (111). The P2/P1 was 2.5, the P2/P3 was 3.2, and the P2/P4 was 3.

A spectrum of this negative electrode active material obtained by time-of-flight secondary ion mass spectrometry (TOF-SIMS) was analyzed to demonstrate that a coating of a composite containing C, N, and O was formed.

The negative electrode active material particles had a median diameter of 6 um.

The negative electrode active material particles were dispersed at a proportion of 10 mass% in pure water at 25°C, and the dispersion exhibited a value of pH of 11.8.

Then, this negative electrode active material was blended with a carbon-based active material so that a mass ratio between the silicon-based active material particles and the carbon-based active material particles was 1:9 to produce a mixed negative electrode active material. Here, the used carbon-based active material was a mixture of natural graphite and artificial graphite that were coated with a pitch layer mixed at a mass ratio of 5:5. The carbon-based active material had a median diameter of 20 $\mu$m.

Then, the above negative electrode active material, a conductive auxiliary 1 (carbon nanotube, CNT), a conductive auxiliary 2 (carbon fine particles having a median diameter of approximately 50 nm), styrene-butadiene rubber (styrene-butadiene copolymer, referred to as SBR hereinafter), and carboxymethylcellulose (hereinafter, referred to as CMC) were mixed at a dry mass ratio of 92.5:1:1:2.5:3, and then diluted with pure water to form an aqueous negative electrode slurry. The above SBR and CMC were negative electrode binders (negative electrode binding agents).

A used negative electrode current collector was an electrolytic copper foil with 15 um in thickness. This electrolytic copper foil contained carbon and sulfur at a concentration of each 70 mass-ppm. Finally, the aqueous negative electrode slurry was applied on the negative electrode current collector, and dried in a vacuum atmosphere at 100°C $\times$ 1 hour. A deposition amount per unit area (also referred to as an area density) of the negative electrode active material layer on one surface of the negative electrode after drying was 5 mg/cm$^2$.

Then, solvents (4-fluoro-1,3-dioxolan-2-one (FEC), ethylene carbonate (EC), and dimethyl carbonate (DMC)) were mixed, and then an electrolyte salt (lithium hexafluorophosphate: $LiPF_6$) was dissolved to prepare an electrolyte liquid. In this case, the solvent composition was set to FEC:EC:DMC=10:20:70, and a content of the electrolyte salt was 1.2 mol/kg relative to the solvent.

Then, a secondary battery was assembled as follows. First, an aluminum lead was ultrasonic-welded with one end of the positive electrode current collector, and a nickel lead was welded with one end of the negative electrode current collector. Subsequently, the positive electrode, a separator, the negative electrode, and a separator were laminated in this order, and wound in a longitudinal direction to obtain a wound electrode assembly. A winding end thereof was fixed with a PET protective tape. The used separator was a laminated film (thickness: 12 um) in which a film containing porous polyethylene as a main component was sandwiched by films containing porous polypropylene as a main component. Subsequently, the electrode assembly was sandwiched between an exterior member, and then an outer periphery excluding one side was thermally fused to house the electrode assembly thereinside. The used exterior member was an aluminum-laminated film in which a nylon film, an aluminum foil, and a polypropylene film were laminated. Subsequently, the prepared electrolyte liquid was injected through the opening and impregnated under a vacuum atmosphere, and then thermal fusion was performed to seal the exterior member.

Cycle characteristics and first charge-discharge characteristics of the secondary battery produced as above were evaluated.

The cycle characteristics were determined as follows. First, to stabilize the battery, the battery was charged and discharged at 0.2 C with two cycles under an atmosphere at 25°C, and a discharge capacity at the 2nd cycle was measured. Subsequently, the battery was charged and discharged until a total number of cycles was 499 cycles, and the discharge capacities were measured in each time. Finally, a discharge capacity at the 500th cycle obtained by the 0.2-C charge and discharge was divided by the discharge capacity at the 2nd cycle to calculate a capacity retention rate (hereinafter, which is also simply referred to as the retention rate). In the normal cycles, namely cycles from the 3rd cycle to the 499th cycle, the battery was charged at 0.7 C and discharged at 0.5 C.

When the first charge-discharge characteristics were determined, a first efficiency (hereinafter, which may be referred to as the initial efficiency) was calculated. The first efficiency was calculated with a formula represented by First efficiency (%) = (First discharge capacity / First charge capacity)×100. The atmospheric temperature was same as in the determination of the cycle characteristics.

A pot-life of the slurry was evaluated as a time until gas was generated from the slurry. A longer time thereof can be said to indicate the slurry being more stable. Specifically, 10 g of the produced slurry was separated and enclosed in an aluminum-laminated package, and volumes thereof immediately after the preparation (after 0 hours), after 6 hours, after 24 hours, after 48 hours, after 72 hours, after 96 hours, after 120 hours, after 144 hours, and after 168 hours were measured by an Archimedes' method. A case where a change in volume from the production immediately thereafter exceeded 1 ml was judged to generate gas. The slurry was stored at 20°C.

(Comparative Examples 1-1 and 1-2 and Examples 1-2 and 1-3)

Secondary batteries were manufactured in the same manner as in Example 1-1 except that the oxygen amount in bulk of the silicon compound was regulated. In this case, the oxygen amount was regulated by changing: the ratio of metal silicon and silicon dioxide in the raw material of the silicon compound; and the heating temperature. Table 1 shows values of X of the silicon compounds represented by SiOx in Examples 1-2 to 1-3 and Comparative Examples of 1-1 and 1-2.

Table 1 shows the evaluation results of Comparative Examples 1-1 and 1-2 and Examples 1-1 to 1-3.

[Table 1]

Si (111) crystallite: Amorphous
C,N,O coating: Presence
Metal salt: Li2CO3, Addition amount: 1.5 mass%
Metal salt of phosphoric acid: Presence
P2/P1=2.5, P2/P3=3.2, P2/P4=3
pH: 11.8
Carbon coating: Presence
Graphite (natural graphite : artificial graphite = 5:5) D50 = 20 um
SiOx proportion: 10 mass%, Average thickness of carbon
material: 100 nm
Modification method: Oxidation-reduction doping

| Table 1 | x | Capacity retention rate (%) | Initial efficiency (%) | Time until gas generation (hours) |
|---|---|---|---|---|
| Comparative Example 1-1 | 0.7 | 66.0 | 88.3 | 24 h |
| Example 1-1 | 0.9 | 68.5 | 88.7 | 48 h |
| Example 1-2 | 1 | 70.1 | 89.5 | 168 h |
| Example 1-3 | 1.1 | 70.4 | 87.6 | 72 h |
| Comparative Example 1-2 | 1.3 | - | - | - |

As shown in Table 1, when the value of X was X<0.8 in the silicon compound represented by SiOx, the battery characteristics were deteriorated. For example, when oxygen was insufficient (X=0.7) as shown in Comparative Example 1-1, the capacity retention rate was considerably deteriorated. Meanwhile, when the oxygen content was large (X=1.3) in Comparative Example 1-2, the conductivity decreased and the capacity of the silicon oxide was substantially not exhibited, and thus the evaluation was stopped.

(Comparative Example 2-1 and Example 2-1)

Secondary batteries were manufactured under the same conditions of Example 1-2 except that the crystallite size of Si (111) of the silicon compound was changed as Table 2, and the cycle characteristics, the first efficiency, and the slurry stability were evaluated. The crystallite size of Si (111) was regulated in the step of fixing and depositing the silicon oxide gas on the absorbent plate.

Table 2 shows the evaluation results of Comparative Example 2-1 and Example 2-1.

[Table 2]

SiOx: x=1, Li2CO3: Presence, D50 = 6 $\mu$m, 1 $\mu$m or less: 0%

Si (111) crystallite: Amorphous

C,N,O coating: Presence

Metal salt: Li2CO3, Addition amount: 1.5 mass%

Metal salt of phosphoric acid: Presence

P2/P1=2.5, P2/P3=3.2, P2/P4=3

pH: 11.8

Carbon coating: Presence

Graphite (natural graphite : artificial graphite = 5:5) D50 = 20 $\mu$m

SiOx proportion: 10 mass%, average thickness of carbon

material: 100 nm

Modification method: Oxidation-reduction doping

| Table 2 | Crystallite size (nm) | Capacity retention rate (%) | Initial efficiency (%) | Time until gas generation (hours) |
|---|---|---|---|---|
| Comparative Example 2-1 | 11 | 62.2 | 89.8 | 24 h |
| Example 2-1 | 9 | 70.4 | 89.3 | 120 h |
| Example 1-2 | 7 | 70.1 | 89.5 | 168 h |

As shown in Table 2, a large crystallite size of Si (111), as in Comparative Example 2-1, increased an exposed portion of Si on the surface of the silicon compound to deteriorate the slurry stability.

(Comparative Example 3-1)

The secondary battery was produced under the same condition of Example 1-2 except that the lithium silicate to be contained inside the silicon compound particles was not modified for lithium not to be contained in the silicon compound, and the cycle characteristics, the first efficiency, and the slurry stability were evaluated.

Table 3 shows the evaluation results of Comparative Example 3-1.

[Table 3]

SiOx x=1, Crystallite: 7 nm, D50 = 6 $\mu$m, 1 $\mu$m or less: 0%

Si (111) crystallite: Amorphous

C,N,O coating: Presence

Metal salt: Li2CO3, Addition amount: 1.5 mass%

Metal salt of phosphoric acid: Presence

P2/P1=2.5, P2/P3=3.2, P2/P4=3

pH: 11.8

Carbon coating: Presence

Graphite (natural graphite : artificial graphite = 5:5) D50 = 20 $\mu$m

SiOx proportion: 10 mass%, Average thickness of carbon material: 100 nm

Modification method: Oxidation-reduction doping

(continued)

| Table 3 | Li2SiO3 | Capacity retention rate (%) | Initial efficiency (%) | Time until gas generation (hours) |
|---|---|---|---|---|
| Example 1-2 | presence | 70.1 | 89.5 | 168 h |
| Comparative Example 3-1 | absence | 71.3 | 78.0 | none |

As shown in Table 3, in Comparative Example 3-1, which performed no modification and which contained no lithium in the silicon compound, gas was not generated from the slurry because of no Li, but the initial efficiency was deteriorated.

(Comparative Example 4-1)

The secondary battery was produced under the same condition of Example 1-2 except that lithium carbonate was not added into the negative electrode active material, and the cycle characteristics, the first efficiency, and the slurry stability were evaluated.

Table 4 shows the evaluation results of Comparative Example 4-1.

[Table 4]

SiOx x=1, Crystallite: 7 nm, D50 = 6 $\mu$m, 1 $\mu$m or less: 0%
Si (111) crystallite: Amorphous
C,N,O coating: Presence
Metal salt of phosphoric acid: Presence
pH: 11.8
Carbon coating: Presence
Graphite (natural graphite : artificial graphite = 5:5) D50
= 20 $\mu$m
SiOx proportion: 10 mass%, Average thickness of carbon
material: 100 nm
Modification method: Oxidation-reduction doping

| Table 4 | Li2CO3 | Capacity retention rate (%) | Initial efficiency (%) | Time until gas generation (hours) |
|---|---|---|---|---|
| Example 1-2 | presence | 70.1 | 89.5 | 168 h |
| Comparative Example 4-1 | absence | 69.8 | 89.6 | 6 h |

As shown in Table 4, adding lithium carbonate improved the slurry stability.

(Example 5-1)

The secondary battery was produced under the same condition of Example 1-2 except that the heat treating time of the silicon-based active material particles modified by the oxidation-reduction method was extended to proceed Si crystallization, and the cycle characteristics, the first efficiency, and the slurry stability were evaluated.

Table 5 shows the evaluation results of Example 5-1.

[Table 5]

SiOx x=1, Li2CO3: Presence, D50 = 6 $\mu$m, 1 $\mu$m or less: 0%
C,N,O coating: Presence
Metal salt: Li2CO3, Addition amount: 1.5 mass%
Metal salt of phosphoric acid: Presence
P2/P1=2.5, P2/P3=3.2, P2/P4=3

(continued)

pH: 11.8
Carbon coating: Presence
Graphite (natural graphite : artificial graphite = 5:5) D50 = 20 $\mu$m

| | | | | |
|---|---|---|---|---|
| SiOx proportion: 10 mass%, average thickness of carbon material: 100 nm Modification method: Oxidation-reduction doping | | | | |
| Table 5 | Si (111) crystallite | Capacity retention rate (%) | Initial efficiency (%) | Time until gas generation (hours) |
| Example 1-2 | amorphous | 70.1 | 89.5 | 168 h |
| Example 5-1 | not amorphous | 68.8 | 89.7 | 120 h |

As shown in Table 5, when the Si (111) crystallite was amorphous, the capacity retention rate was improved.

(Example 6-1)

The secondary battery was produced under the same condition of Example 1-2 except that the silicon-based active material particles modified by the oxidation-reduction method was heat-treated under an argon atmosphere instead of nitrogen, and the cycle characteristics, the first efficiency, and the slurry stability were evaluated. This heat treatment prevent the C,N,O composite coating from forming on the outermost surfaces of the silicon-based negative electrode active material particles.

Table 6 shows the evaluation results of Example 6-1.

[Table 6]
SiOx x=1, Crystallite: 7 nm, Li2CO3: Presence, D50 = 6 $\mu$m,
1 $\mu$m or less: 0%
Si (111) crystallite: Amorphous
Metal salt: Li2CO3, Addition amount: 1.5 mass%
Metal salt of phosphoric acid: Presence
P2/P1=2.5, P2/P3=3.2, P2/P4=3
pH: 11.8

| | | | | |
|---|---|---|---|---|
| Carbon coating: Presence Graphite (natural graphite : artificial graphite = 5:5) D50 = 20 $\mu$m SiOx proportion: 10 mass%, Average thickness of carbon material: 100 nm Modification method: Oxidation-reduction doping | | | | |
| Table 6 | C,N,O coating | Capacity retention rate (%) | Initial efficiency (%) | Time until gas generation (hours) |
| Example 1-2 | presence | 70.1 | 89.5 | 168 h |
| Example 6-1 | absence | 69.7 | 89.1 | 120 h |

As shown in Table 6, when the C,N,O composite coating was present on the outermost surfaces of the silicon-based negative electrode active material particles, Li was hardly eluted in the aqueous slurry to improve the slurry stability compared with the case without the composite coating.

(Examples 7-1 to 7-4)

The secondary batteries were produced under the same condition of Example 1-2 except that the addition proportion of lithium carbonate was changed, and the cycle characteristics, the first efficiency, and the slurry stability were evaluated.

Table 7 shows the evaluation results of Examples 7-1 to 7-4.

[Table 7]

SiOx x=1, Crystallite: 7 nm, Li2CO3: Presence, D50 = 6 μm, 1 μm or less: 0%

Si (111) crystallite: Amorphous

C, N, O coating: Presence

| Metal salt: Li2CO3 Metal salt of phosphoric acid: Presence P2/P3=3.2, P2/P4=3 pH: 11.8 Carbon coating: Presence Graphite (natural graphite : artificial graphite = 5:5) D50 = 20 μm SiOx proportion: 10 mass%, Average thickness of carbon material: 100 nm Modification method: Oxidation-reduction doping | | | | |
|---|---|---|---|---|
| Table 7 | Addition proportion of metal salt | Capacity retention rate (%) | Initial efficiency (%) | Time until gas generation (hours) |
| Example 7-1 | 0.4% | 69.4 | 89.6 | 96 h |
| Example 7-2 | 0.5% | 70.2 | 89.1 | 144 h |
| Example 1-2 | 1.5% | 70.1 | 89.5 | 168 h |
| Example 7-3 | 2.5% | 69.7 | 88.9 | 144 h |
| Example 7-4 | 2.8% | 69.6 | 87.7 | 96 h |

As shown in Table 7, when the addition proportion of lithium carbonate was 0.5 mass% or more, the slurry hardly generated gas compared with the case of less than 0.5 mass%. When the addition proportion of lithium carbonate was 2.5 mass% or less, the initial efficiency was improved and the slurry stability was also improved compared with the case of exceeding 2.5 mass%.

(Examples 8-1 to 8-2 and Comparative Examples 8-1 to 8-2)

The secondary batteries were produced under the same condition of Example 1-2 except that the analysis peak intensity ratio P2/P1 in the X-ray analysis was changed as Table 8, and the cycle characteristics, the first efficiency, and the slurry stability were evaluated.

Table 8 shows the evaluation results of Examples 8-1 to 8-2 and Comparative Examples 8-1 to 8-2.

[Table 8]

SiOx x=1, Crystallite: 7 nm, Li2CO3: Presence, D50 = 6 um, 1 $\mu$m or less: 0%

Si (111) crystallite: Amorphous

C, N, O coating: Presence

Metal salt: Li2CO3

Metal salt of phosphoric acid: Presence P2/P3=3.2, P2/P4=3

pH: 11.8

Carbon coating: Presence

Graphite (natural graphite : artificial graphite = 5:5) D50 = 20 um

SiOx proportion: 10 mass%, Average thickness of carbon

material: 100 nm

Modification method: Oxidation-reduction doping

| Table 8 | P2/P1 | Capacity retention rate (%) | Initial efficiency (%) | Time until gas generation (hours) |
|---|---|---|---|---|
| Comparative Example 8-1 | 1.7 | 69.7 | 87.6 | 96 h |
| Example 8-1 | 2.1 | 69.9 | 88.4 | 144 h |
| Example 1-2 | 2.5 | 70.1 | 89.5 | 168 h |
| Example 8-2 | 3.3 | 69.8 | 89.3 | 144 h |
| Comparative Example 8-2 | 3.8 | 69.3 | 89.2 | 96 h |

As shown in Table 8, in the case of 2>P2/P1, the addition amount of lithium carbonate increased to deteriorate the first efficiency and the slurry stability. In the case of 3.5<P2/P1, the addition amount of lithium carbonate was small and its effect was not sufficiently exhibited, and thereby the slurry stability was deteriorated.

(Examples 9-1 to 9-4)

The secondary batteries were produced under the same condition of Example 1-2 except that the analysis peak intensity ratio P2/P3 in the X-ray analysis was changed as Table 9, and the cycle characteristics, the first efficiency, and the slurry stability were evaluated. This ratio was regulated by changing the heat-treating temperature in the heat treatment for stabilizing the Li silicate.

Table 9 shows the evaluation results of Examples 9-1 to 9-4.

[Table 9]

SiOx x=1, Crystallite: 7 nm, Li2CO3: Presence, D50 = 6 $\mu$m, 1 $\mu$m or less: 0%

Si (111) crystallite: Amorphous

C, N, O coating: Presence

Metal salt: Li2CO3, Addition amount: 1.5 mass%

Metal salt of phosphoric acid: Presence P2/P1=2.5, P2/P4=3

pH: 11.8

Carbon coating: Presence

Graphite (natural graphite : artificial graphite = 5:5) D50= 20 $\mu$m

SiOx proportion: 10 mass%, Average thickness of carbon

material: 100 nm

Modification method: Oxidation-reduction doping

| Table 9 | P2/P3 | Capacity retention rate (%) | Initial efficiency (%) | Time until gas generation (hours) |
|---|---|---|---|---|
| Example 9-1 | 2.3 | 68.7 | 89.8 | 96 h |
| Example 9-2 | 2.7 | 69.5 | 89.6 | 120 h |
| Example 1-2 | 3.2 | 70.1 | 89.5 | 168 h |
| Example 9-3 | 3.8 | 70.4 | 89.1 | 144 h |
| Example 9-4 | 4.2 | 70.2 | 88.8 | 144 h |

As shown in Table 9, when the ratio of P2/P3 was 4 or less, the initial efficiency was improved. When the ratio of P2/P3 was 5 or more, the capacity retention rate and the slurry stability were improved. This is because low crystallinity of Si (namely, small P3) does not increase the exposed portion of Si on the silicon compound surface.

(Examples 10-1)

The secondary battery was produced under the same condition of Example 1-2 except that the metal salt of phosphoric acid (aluminum phosphate) in the negative electrode material was not added, and the cycle characteristics, the first efficiency, and the slurry stability were evaluated.

Table 10 shows the evaluation results of Example 10-1.

[Table 10]

SiOx x=1, Crystallite: 7 nm, Li2CO3: Presence, D50 = 6 $\mu$m, 1 $\mu$m or less: 0%
Si (111) crystallite: Amorphous
C, N, O coating: Presence
Metal salt: Li2CO3, Addition amount: 1.5 mass%
Metal salt of phosphoric acid: Presence P2/P1=2.5, P2/P3=3.2

| | | | | |
|---|---|---|---|---|
| pH: 11.8 Carbon coating: Presence Graphite (natural graphite : artificial graphite = 5:5) D50 = 20 $\mu$m SiOx proportion: 10 mass%, Average thickness of carbon material: 100 nm Modification method: Oxidation-reduction doping | | | | |
| Table 10 | Aluminum phosphate | Capacity retention rate (%) | Initial efficiency (%) | Time until gas generation (hours) |
| Example 1-2 | presence | 70.1 | 89.5 | 168 h |
| Example 10-1 | absence | 70.2 | 89.3 | 96 h |

As shown in Table 10, when aluminum phosphate was present, the coating inhibiting elution of Li ions in the aqueous slurry was formed to improve the slurry stability.

(Examples 11-1 to 11-4)

The secondary batteries were produced under the same condition of Example 1-2 except that the analysis peak intensity ratio P2/P4 in the X-ray analysis was changed as Table 11, and the cycle characteristics, the first efficiency, and the slurry stability were evaluated. This ratio was regulated by changing the heat-treating temperature in the heat treatment for stabilizing the Li silicate and by changing the blending amount of aluminum phosphate.

Table 11 shows the evaluation results of Examples 11-1 to 11-4.

[Table 11]

| SiOx x=1, Crystallite: 7 nm, Li2CO3: Presence, D50 = 6 μm, 1 μm or less: 0% |
| --- |
| C, N, O coating: Presence |
| Metal salt: Li2CO3, Addition amount: 1.5 mass% |
| Metal salt of phosphoric acid: Presence |
| P2/P1=2.5, P2/P3=3.2 |
| pH: 11.8 |
| Carbon coating: Presence |
| Graphite (natural graphite : artificial graphite = 5:5) D50 = 20 μm |
| SiOx proportion: 10 mass%, Average thickness of carbon material: 100 nm |
| Modification method: Oxidation-reduction doping |

| Table 11 | P2/P4 | Capacity retention rate (%) | Initial efficiency (%) | Time until gas generation (hours) |
| --- | --- | --- | --- | --- |
| Example 11-1 | 1.3 | 69.9 | 88.9 | 96 h |
| Example 11-2 | 1.6 | 69.7 | 89.1 | 144 h |
| Example 1-2 | 3 | 70.1 | 89.5 | 168 h |
| Example 11-3 | 3.5 | 70.2 | 89.6 | 120 h |
| Example 11-4 | 4.5 | 70.0 | 89.3 | 96 h |

As shown in Table 11, when the ratio of P2/P4 was 1.5 or more, the initial efficiency and the slurry stability were improved. When the ratio of P2/P3 was 4 or less, the slurry stability was improved.

(Examples 12-1 to 12-4)

The secondary batteries were produced under the same condition of Example 1-2 except that the value of pH of the dispersion was changed as Table 12, and the cycle characteristics, the first efficiency, and the slurry stability were evaluated. For the dispersion, the negative electrode active material particles were dispersed at a proportion of 10 mass% in pure water at 25°C.
Table 12 shows the evaluation results of Examples 12-1 to 12-4.

[Table 12]

| Si (111) crystallite: Amorphous |
| --- |
| C, N, O coating: Presence |
| SiOx x=1, Crystallite: 7 nm, Li2CO3: Presence, D50 = 6 μm, 1 μm or less: 0% |
| Metal salt: Li2CO3, Addition amount: 1.5 mass% |
| Metal salt of phosphoric acid: Presence |
| P2/P1=2.5, P2/P3=3.2, P2/P4=3 |
| Carbon coating: Presence |
| Graphite (natural graphite : artificial graphite = 5:5) D50 = 20 μm |
| SiOx proportion: 10 mass%, Average thickness of carbon material: 100 nm |
| Modification method: Oxidation-reduction doping |

| Table 12 | pH | Capacity retention rate (%) | Initial efficiency (%) | Time until gas generation (hours) |
| --- | --- | --- | --- | --- |
| Example 12-1 | 9.8 | 70.2 | 89.8 | 96 h |
| Example 12-2 | 10.1 | 69.9 | 89.7 | 144 h |

(continued)

Si (111) crystallite: Amorphous

C, N, O coating: Presence

SiOx x=1, Crystallite: 7 nm, Li2CO3: Presence, D50 = 6 $\mu$m,

1 $\mu$m or less: 0%

Metal salt: Li2CO3, Addition amount: 1.5 mass%

Metal salt of phosphoric acid: Presence

P2/P1=2.5, P2/P3=3.2, P2/P4=3

Carbon coating: Presence

Graphite (natural graphite : artificial graphite = 5:5) D50 = 20 $\mu$m

SiOx proportion: 10 mass%, Average thickness of carbon

material: 100 nm

Modification method: Oxidation-reduction doping

| Table 12 | pH | Capacity retention rate (%) | Initial efficiency (%) | Time until gas generation (hours) |
|---|---|---|---|---|
| Example 1-2 | 11.8 | 70.1 | 89.5 | 168 h |
| Example 12-3 | 12.4 | 69.5 | 88.9 | 144 h |
| Example 12-4 | 12.7 | 68.9 | 88.6 | 120 h |

As shown in Table 12, when the pH was 10 or higher, the initial efficiency was rather low in some cases but the slurry stability was improved. When the pH was 12.5 or lower, the capacity retention rate and the initial efficiency were improved.

(Comparative Example 13-1)

The secondary battery was produced under the same condition of Example 1-2 except that the carbon coating was not formed, and the cycle characteristics, the first efficiency, and the slurry stability were evaluated.
Table 13 shows the evaluation results of Comparative Example 13-1.

[Table 13]

Si (111) crystallite: Amorphous

C, N, O coating: Presence

SiOx x=1, Crystallite: 7 nm, Li2CO3: Presence, D50 = 6 $\mu$m,

1 $\mu$m or less: 0%

Metal salt: Li2CO3, Addition amount: 1.5 mass%

Metal salt of phosphoric acid: Presence

P2/P1=2.5, P2/P3=3.2, P2/P4=3

pH: 11.8

Graphite (natural graphite : artificial graphite = 5:5) D50 = 20 $\mu$m

SiOx proportion: 10 mass%, Average thickness of carbon

material: 100 nm

Modification method: Oxidation-reduction doping

| Table 13 | Carbon coating | Capacity retention rate (%) | Initial efficiency (%) | Time until gas generation (hours) |
|---|---|---|---|---|
| Example 1-2 | presence | 70.1 | 89.5 | 168 h |
| Comparative Example 13-1 | absence | - | - | - |

As shown in Table 13, the formed carbon coating improved the conductivity to improve the battery characteristics. Without the carbon coating, much Li was eluted to cause difficulty in the slurry preparation, and thus the evaluation was stopped.

(Examples 14-1 and 14-2)

The secondary batteries were produced under the same condition of Example 1-2 except that the proportion of the primary particles with 1 um or less in the primary particles of the silicon compound was changed as Table 14, and the cycle characteristics, the first efficiency, and the slurry stability were evaluated.

Table 14 shows the evaluation results of Examples 14-1 and 14-2.

[Table 14]

SiOx x=1, Crystallite: 7 nm, Li2CO3: Presence, D50 = 6 $\mu$m
Si (111) crystallite: Amorphous
C, N, O coating: Presence
Metal salt: Li2CO3, Addition amount: 1.5 mass%
Metal salt of phosphoric acid: Presence
P2/P1=2.5, P2/P3=3.2, P2/P4=3
pH: 11.8
Carbon coating: Presence
Graphite (natural graphite : artificial graphite = 5:5) D50 = 20 $\mu$m
SiOx proportion: 10 mass%, Average thickness of carbon
material: 100 nm
Modification method: Oxidation-reduction doping

| Table 14 | 1 $\mu$m or less | Capacity retention rate (%) | Initial efficiency (%) | Time until gas generation (hours) |
|---|---|---|---|---|
| Example 14-1 | 8 | 67.8 | 89.6 | 120 h |
| Example 14-2 | 5 | 68.5 | 89.3 | 144 h |
| Example 1-2 | 0 | 70.1 | 89.5 | 168 h |

As shown in Table 14, a smaller proportion of the primary particles with 1 um or less in the primary particles of the silicon compound reduced a specific surface area of the negative electrode active material particles to allow Li to be hardly eluted, and thus the slurry stability was improved.

(Examples 15-1 to 15-4)

The secondary batteries were produced under the same condition of Example 1-2 except that the median diameter of the silicon compound particles was changed as Table 15, and the cycle characteristics, the first efficiency, and the slurry stability were evaluated.

Table 15 shows the evaluation results of Examples 15-1 to 15-4.

[Table 15]

SiOx x=1, Crystallite: 7 nm, Li2CO3: Presence, 1 $\mu$m or less: 0%
Si (111) crystallite: Amorphous
C, N, O coating: Presence
Metal salt: Li2CO3, Addition amount: 1.5 mass%
Metal salt of phosphoric acid: Presence
P2/P1=2.5, P2/P3=3.2, P2/P4=3
pH: 11.8
Carbon coating: Presence
Graphite (natural graphite : artificial graphite = 5:5) D50 = 20 $\mu$m
SiOx proportion: 10 mass%, Average thickness of carbon
material: 100 nm
Modification method: Oxidation-reduction doping

| Table 15 | Median diameter (μm) | Capacity retention rate (%) | Initial efficiency (%) | Time until gas generation (hours) |
|---|---|---|---|---|
| Example 15-1 | 3 | 67.6 | 89.8 | 96 h |
| Example 15-2 | 4 | 68.3 | 89.6 | 120 h |
| Example 1-2 | 6 | 70.1 | 89.5 | 168 h |
| Example 15-3 | 11 | 70.3 | 89.1 | 144 h |
| Example 15-4 | 13 | 70.6 | 88.7 | 144 h |

As shown in Table 15, when the median diameter was 4 um or more, the negative electrode active material particles had a small surface area per mass and an elution amount of Li did not increase, and thereby the slurry stability was improved. When the median diameter was 15 um or less, the contacting area between the particles was appropriate to improve the conductivity, and thereby the initial efficiency was improved.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

**Claims**

1. A negative electrode active material for a lithium-ion secondary battery, comprising negative electrode active material particles, wherein

the negative electrode active material particles contain silicon compound particles composed of a silicon compound containing lithium and oxygen,

a ratio between oxygen and silicon that constitute the silicon compound particles satisfies SiOx : $0.8 \leq X \leq 1.2$,

at least a part of Li that constitutes the silicon compound particles is $Li_2SiO_3$,

the silicon compound particles have a crystallite size of 10 nm or less, the crystallite size being derived from a Si (111) crystal face obtained by X-ray diffraction using CuKα radiation,

at least a part of surfaces of the silicon compound particles is coated with a carbon coating,

the negative electrode active material particles contain lithium carbonate,

at least a part of the lithium carbonate has crystallinity, and

in the negative electrode active material particles, a peak height P1 derived from at least a part of lithium carbonate and a peak height P2 derived from at least a part of $Li_2SiO_3$ satisfy a relationship of $2 \leq P2/P1 \leq 3.5$, the peak of P1 appearing within a range of a diffraction angle 2θ of 20 to 21° and the peak of P2 appearing within a range of the diffraction angle 2θ of 17 to 20° with X-ray diffraction using CuKα radiation.

2. The negative electrode active material according to claim 1, wherein the crystallite size derived from the Si (111) crystal face obtained by X-ray diffraction using CuKα radiation is 8 nm or less.

3. The negative electrode active material according to claim 1 or 2, wherein the crystallite size derived from the Si (111) crystal face obtained by X-ray diffraction using CuKα radiation exhibits substantially an amorphous state.

4. The negative electrode active material according to any one of claims 1 to 3, wherein an outermost layer of the negative electrode active material particles is coated with a composite containing C, N, and O.

5. The negative electrode active material according to any one of claims 1 to 4, wherein a total amount of the lithium carbonate present in the negative electrode active material particles is within a range of 0.5 mass% or more and 2.5 mass% or less relative to a total amount of the negative electrode active material particles.

6. The negative electrode active material according to any one of claims 1 to 5, wherein in the negative electrode active material particles, the peak height P2 derived from at least a part of $Li_2SiO_3$ and a peak height P3 derived from the Si (111) crystal face satisfy a relationship of $2.5 \leq P2/P3 \leq 4$, the peak of P2 appearing within the range of the diffraction angle 20 of 17 to 20° and the peak of P3 appearing within a range of the diffraction angle 20 of 44 to 50° in X-ray diffraction using CuKα radiation.

7. The negative electrode active material according to any one of claims 1 to 6, wherein the negative electrode active material particles further contain aluminum phosphate.

8. The negative electrode active material according to claim 7, wherein in the negative electrode active material particles, a peak height P4 derived from at least a part of aluminum phosphate and the peak height P2 derived from at least a part of $Li_2SiO_3$ satisfy a relationship of $1.5 \leq P2/P4 \leq 4$, the peak of P4 appearing within a range of the diffraction angle 20 of 21 to 23° and the peak of P2 appearing within the range of the diffraction angle 20 of 17 to 20° in X-ray diffraction using CuKα radiation.

9. The negative electrode active material according to any one of claims 1 to 8, wherein a dispersion in which the negative electrode active material particles are dispersed at a proportion of 10 mass% in pure water at 25°C exhibits a value of pH of 10 or higher and 12.5 or lower.

10. The negative electrode active material according to any one of claims 1 to 9, wherein a proportion of primary particles having a particle size of 1 um or less in primary particles of the silicon compound particles is 5% or less on a volumetric basis.

11. The negative electrode active material according to any one of claims 1 to 10, wherein a median diameter of the negative electrode active material particles is 4.0 um or more and 15 um or less.

12. A negative electrode, comprising the negative electrode active material according to any one of claims 1 to 11.

13. A method for manufacturing a negative electrode active material for a lithium-ion secondary battery comprising a negative electrode active material, the method comprising the steps of:

    producing silicon compound particles containing a silicon compound;
    coating at least a part of the silicon compound particles with a carbon layer;
    inserting Li into the silicon compound particles for allowing the silicon compound particles to contain $Li_2SiO_3$; and
    blending lithium carbonate at least partially having crystallinity into the produced negative electrode active material particles, wherein
    in blending lithium carbonate, the lithium carbonate is blended so that, in the negative electrode active material particles, a peak height P1 derived from at least a part of lithium carbonate and a peak height P2 derived from at least a part of $Li_2SiO_3$ satisfy a relationship of $2 \leq P2/P1 \leq 3.5$, the peak of P1 appearing within a range of a diffraction angle 20 of 20 to 21° and the peak of P2 appearing within a range of the diffraction angle 20 of 17 to 20° with X-ray diffraction using CuKα radiation.

[FIG. 1]

[FIG. 2]

$Li_2SiO_3$

$Li_2CO_3$

Si(220)

$2\theta/°$

[FIG. 3]

## INTERNATIONAL SEARCH REPORT

| International application No. |
|---|
| **PCT/JP2022/019356** |

**A. CLASSIFICATION OF SUBJECT MATTER**

*H01M 4/58*(2010.01)i; *C01B 33/32*(2006.01)i; *H01M 4/36*(2006.01)i; *H01M 4/38*(2006.01)i
FI: H01M4/58; H01M4/38 Z; H01M4/36 C; H01M4/36 A; C01B33/32

According to International Patent Classification (IPC) or to both national classification and IPC

**B. FIELDS SEARCHED**

Minimum documentation searched (classification system followed by classification symbols)
H01M4/58; C01B33/32; H01M4/36; H01M4/38

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2017/183286 A1 (SHIN-ETSU CHEMICAL COMPANY, LIMITED) 26 October 2017 (2017-10-26) | 1-3, 5, 10-12 |
| | claims 1, 3, 5-6, 10, paragraphs [0018], [0030], table 2, example 2-1, table 4, examples 4-8 | |
| Y | claims 1, 3, 5-6, 10, paragraphs [0018], [0030], table 2, example 2-1, table 4, examples 4-8 | 7, 9 |
| A | claims 1, 3, 5-6, 10, paragraphs [0018], [0030], table 2, example 2-1, table 4, examples 4-8 | 4, 6, 8, 13 |
| Y | JP 2020-77510 A (SHIN-ETSU CHEMICAL COMPANY, LIMITED) 21 May 2020 (2020-05-21) | 7, 9 |
| | claim 1, paragraphs [0021], [0059] | |
| A | claim 1, paragraphs [0021], [0059] | 4, 6, 8, 13 |
| A | CN 111430677 A (SVOLT ENERGY TECHNOLOGY COMPANY, LIMITED) 17 July 2020 (2020-07-17) fig. 4-5 | 1-13 |
| A | JP 2017-147057 A (SHIN-ETSU CHEMICAL COMPANY, LIMITED) 24 August 2017 (2017-08-24) claim 1 | 1-13 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 June 2022** | **12 July 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/019356**

| Patent document cited in search report | | | Publication date (day/month/year) | Patent family member(s) | | | Publication date (day/month/year) |
|---|---|---|---|---|---|---|---|
| WO | 2017/183286 | A1 | 26 October 2017 | US 2019/0148728 A1 claims 14, 16, 22-23, 27, paragraphs [0029], [0041], table 2, example 2-1, table 4, examples 4-8 | | | |
| | | | | EP | 3447829 | A1 | |
| | | | | CN | 109075331 | A | |
| | | | | KR 10-2018-0134898 | | A | |
| | | | | TW | 201806859 | A | |
| | | | | JP | 2017-195015 | A | |
| JP | 2020-77510 | A | 21 May 2020 | US 2021/0376311 A1 claim 1, paragraphs [0025], [0071] | | | |
| | | | | WO | 2020/095558 | A1 | |
| | | | | EP | 3879608 | A1 | |
| | | | | CN | 112997339 | A | |
| | | | | KR 10-2021-0089653 | | A | |
| | | | | TW | 202029558 | A | |
| CN | 111430677 | A | 17 July 2020 | (Family: none) | | | |
| JP | 2017-147057 | A | 24 August 2017 | US 2021/0193990 A1 claim 17 | | | |
| | | | | WO | 2017/141661 | A1 | |
| | | | | EP | 3404750 | A1 | |
| | | | | TW | 201742299 | A | |
| | | | | CN | 108701824 | A | |
| | | | | KR 10-2018-0114035 | | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001185127 A
- JP 2002042806 A
- JP 2006164954 A
- JP 2006114454 A
- JP 2009070825 A
- JP 2008282819 A
- JP 2008251369 A
- JP 2008177346 A
- JP 2007234255 A
- JP 2009212074 A
- JP 2009205950 A
- JP H06325765 A
- JP 2015156355 A

**Non-patent literature cited in the description**

- *Journal of BATTERY ASSOCIATION OF JAPAN "Denchi,* 01 May 2010, 10
- **A. HOHL ; T. WIEDER ; P. A. VAN AKEN ; T. E. WEIRICH ; G. DENNINGER ; M. VIDAL ; S. OSWALD ; C. DENEKE ; J. MAYER ; H. FUESS.** *J. Non-Cryst. Solids,* 2003, vol. 320, 255
- **V. KAPAKLIS.** *J. Non-Crystalline Solids,* 2008, vol. 354, 612
- **MARIKO MIYACHI ; HIRONORI YAMAMOTO ; HIDEMASA KAWAI.** *J. Electrochem. Soc.,* 2007, vol. 154 (4), A376-A380
- **M. YAMADA ; M. INABA ; A. UEDA ; K. MATSUMOTO ; T. IWASAKI ; T. OHZUKU et al.** *J. Electrochem. Soc.,* 2012, vol. 159, A1630
- **TAEAHN KIM ; SANGJIN PARK ; SEUNG M. OH.** *J. Electrochem. Soc.,* 2007, vol. 154, A1112-A1117
- **HYE JIN KIM ; SUNGHUN CHOI ; SEUNG JONG LEE ; MYUNG WON SEO ; JAE GOO LEE ; ERHAN DENIZ ; YONG JU LEE ; EUN KYUNG KIM ; JANG WOOK CHOI.** *Nano Lett,* 2016, vol. 16, 282-288